# EUROPEAN PATENT APPLICATION

(11) **EP 4 410 455 A1**
(43) Date of publication of application: **07.08.2024**
(21) Application number: 22875573.2
(22) Date of filing: 26.07.2022
(51) Int. Cl.: B23B 1/00, B23B 3/30, B23Q 15/12, G05B 19/416

(54) **VIBRATION-CONTROL MACHINING METHOD FOR LONG WORKPIECE**

(30) Priority: 30.09.2021 JP 2021160206
(71) Applicant: Nakamura-Tome Precision Industry Co., Ltd., Ishikawa 920-2195 (JP); Kanazawa Institute of Technology, Ishikawa 921-8501 (JP)
(72) Inventor: KAWAGOE, Yuta, Hakusan-shi, Ishikawa 920-2195 (JP); NAKANISHI, Kenichi, Hakusan-shi, Ishikawa 920-2195 (JP); MORIMOTO, Yoshitaka, Nonoichi-shi, Ishikawa 921-8501 (JP); HAYASHI, Akio, Nonoichi-shi, Ishikawa 921-8501 (JP)
(74) Representative: Wunderlich & Heim Patentanwälte PartG mbB
(86) International application number: PCT/JP2022/028710
(87) International publication number: WO 2023/053696

(57) **Abstract**

A damping machining method for a long workpiece includes, when rotating the long workpiece in a state in which both end portions of the long workpiece are respectively held and cutting an outer circumferential portion of the long workpiece with a turning tool, applying a torsional load to the long workpiece.

## Description

### TECHNICAL FIELD

The present invention relates to a machining method that uses a damping effect to prevent chattering vibration from occurring when a long workpiece is cutting.

### BACKGROUND ART

When a relatively long workpiece is turned by a machine tool such as a lathe, in some cases, the workpiece vibrates, so-called chattering occurs, and desired machining cannot be performed.

As means for preventing chattering vibration from occurring during such machining of the workpiece, methods described below have been adopted.
(1) A method of monitoring a relation between rotating speed of a spindle and fluctuation amplitude and a fluctuation period of a workpiece and controlling machining conditions (Patent Documents 1 and 2).
(2) An intermediate part of a workpiece is held by a swinging stop device and two cutting tools are placed facing both sides of the workpiece (Patent Document 3).
(3) Improvement of a turning tool shape; for example, a nose R of a tip is reduced in size.
(4) Note that the applicant previously proposed a method of controlling an axial force in a tensile direction while applying the axial force to a long workpiece (Patent Document 4). However, the present invention makes it possible to, with new knowledge, apply damping action.

### RELATED-ART DOCUMENT

### PATENT DOCUMENT

Patent Document 1: JP-A-2021-70138
Patent Document 2: JP-A-2012-91283
Patent Document 3: JP-A-2012-525983
Patent Document 4: JP-A-2012-196748

### SUMMARY OF THE INVENTION

### TECHNICAL PROBLEM

An object of the invention is to provide a damping machining method effective for, when a long workpiece is cutting, preventing chattering vibration from occurring in the workpiece.

### SOLUTION TO PROBLEM

A damping machining method for a long workpiece according to the invention includes, when rotating the long workpiece in a state in which both end portions of the long workpiece are respectively held and cutting an outer circumferential portion of the long workpiece with a turning tool, applying a torsional load to the long workpiece.

In the invention, a long workpiece is particularly effective for a workpiece, in which a ratio of length L to an outer diameter D of the workpiece is L/D=5 or larger.

The state in which both the end portions of the long workpiece are respectively held means causing a force in a torsional direction (a torsional load) to act on the long workpiece in turning. Such state can be realized by holding both ends of the long workpiece using two spindles whose rotation are controlled. Alternatively, if one end of the workpiece is held in a chuck and the other end of the workpiece is held with a tailstock or various auxiliary tools, such state can be realized by adding a resistance force in a rotation direction of the workpiece by the tailstock or the like.

A representative aspect in the invention is an aspect in which a first spindle and a second spindle disposed to face each other on a same axis and caused to hold both the end portions of the long workpiece are prepared, and the torsional load is applied to the long workpiece by giving rotating speed commands different from each other to the first spindle and the second spindle respectively.

When the rotating speed commands different from each other are respectively given by an NC control device or the like and the long workpiece is machined in a both-ended holding manner by the first spindle and the second spindle in this way, the long workpiece is rotation-controlled in a state in which a torsional load involved in a difference between rotating speeds occurs in the first spindle and the second spindle.

In this case, when the rotating speed commands different from each other are given to the first spindle and the second spindle, at least one rotating speed of the rotating speed commands to one or both of the first spindle and the second spindle can be changed or fluctuated. Further, at least one of the first spindle and the second spindle may be controlled to move in an approaching direction and a separating direction and a tensile force or a compression force can be applied to the long workpiece.

When the tensile force or the compression force applied to the long workpiece is variably adjusted according to the length and the diameter of the long workpiece, an edge shape of a tool, or the like, apparent rigidity improvement occurs in the long workpiece and acts to prevent chattering vibration from occurring.

### ADVANTAGEOUS EFFECTS OF INVENTION

In the invention, when a long workpiece is turned in a both-ended holding manner, an external force in a torsional direction (a torsional load) is applied to the workpiece to temporarily improve the rigidity of the long workpiece and temporarily change the direction of a turning load by a turning tool. This makes it possible to easily prevent chattering vibration from occurring in the long workpiece.

### BRIEF DESCRIPTION OF DRAWINGS

FIG. 1 illustrates a state in which a long workpiece is machined in a both-ended holding manner.
FIG. 2A illustrates a frequency analysis chart in the case in which the long workpiece is cut in a state in which a torsional load is not applied to the long workpiece.
FIG. 2B illustrates a frequency analysis chart in the case in which the long workpiece is cut in a state in which a torsional load is applied to the long workpiece.

### DESCRIPTION OF EMBODIMENTS

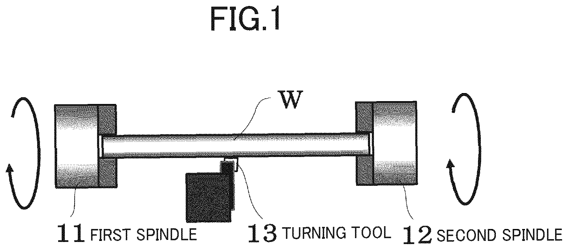

FIG. 1 illustrates an example of machining in a both-ended holding manner in which one end portion of a long workpiece W is chuck-held by a first spindle 11 and the other end portion is held by a second spindle 12.

As the long workpiece W, a workpiece made of S45C and having an outer diameter of 11 to 13 ϕmm and length of 300 mm was used.

Gripping margins by the spindles were respectively set to 20 mm.

Cutting conditions were set to a cut t: 0.3 mm and feeding speed f: 0.15 mm/rev.

First, a rotating speed command of 1800/min was set in the first spindle and the second spindle was caused to follow the first spindle in a free state.

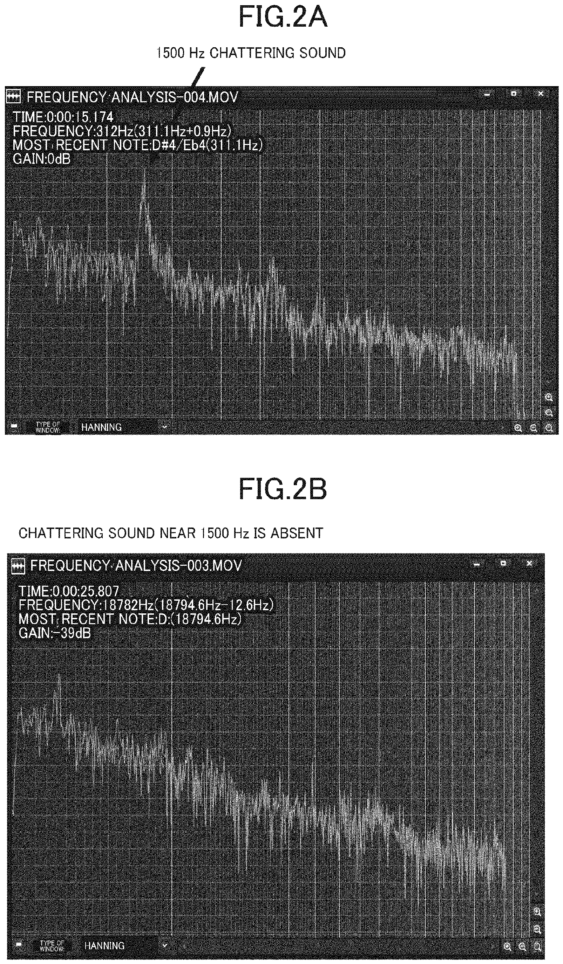

When the long workpiece W was cut by a turning tool 13 under these conditions, a chatter mark occurred in the center of the workpiece. When a frequency analysis was performed, chattering vibration occurred near 1500 Hz as indicated by a chart of the frequency analysis illustrated in FIG. 2A.

Next, rotating speed designation of 1800/min was set in the first spindle and a rotating speed command of 1750/min different from 1800/min was set in the second spindle to apply a torsional load to the long workpiece. The same turning was performed on the long workpiece by the turning tool 13.

This makes it possible to normally perform turning without a chattering mark occurring in the long workpiece. A frequency analysis result at that time is illustrated in FIG. 2B.

It is seen that the chattering vibration near 1500 Hz that occurs in FIG. 2A disappears.

It was made evident from the comparative experiment explained above that, when the long workpiece is cutting while an external force is applied thereto in a torsional direction, damping action occurs in the long workpiece and occurrence of chattering vibration can be suppressed.

Here, the magnitude of the torsional load applied to the long workpiece need only be set as appropriate according to the length and the outer diameter of the workpiece.

When the turning is performed in a both-ended holding state of the long workpiece by the first spindle and the second spindle, it is possible to adjust the magnitude of the torsional load according to a turning state of the long workpiece by not only setting a difference between the rotating speed commands for the first spindle and the second spindle but also fluctuating the rotating speed command for one or both of the spindles within a predetermined range on a low speed side and a high speed side.

Further, the rigidity of the long workpiece is also temporarily improved by applying a tensile force or a compression force along the axial direction of the long workpiece according to the torsional load. It is possible to suppress chattering vibration. It is also possible to adjust the tensile force or the compression force depending on the change of thermal deformation of the long workpiece.

### INDUSTRIAL APPLICABILITY

The invention can be widely applied when a long workpiece is turned.

### REFERENCE SIGNS LIST

- 11: First spindle
- 12: Second spindle
- 13: Turning tool

## Claims

1. A damping machining method for a long workpiece comprising, when rotating the long workpiece in a state in which both end portions of the long workpiece are respectively held and cutting an outer circumferential portion of the long workpiece with a turning tool, applying a torsional load to the long workpiece.

2. The damping machining method for the long workpiece according to claim 1, wherein a first spindle and a second spindle disposed to face each other on a same axis and caused to hold both the end portions of the long workpiece are prepared, and the torsional load is applied to the long workpiece by giving rotating speed commands different from each other to the first spindle and the second spindle respectively.

3. The damping machining method for the long workpiece according to claim 2, wherein, when the rotating speed commands different from each other are given to the first spindle and the second spindle, at least one rotating speed of the rotating speed commands to one or both of the first spindle and the second spindle is fluctuated.

4. The damping machining method for the long workpiece according to claim 2 or 3, wherein at least one of the first spindle and the second spindle is controlled to move in an approaching direction and a separating direction, and a tensile force or a compression force is applied to the long workpiece.
